# EUROPÄISCHE PATENTSCHRIFT

(11) **EP 1 928 723 B1**
(45) Veröffentlichungstag und Bekanntmachung des Hinweises auf die Patenterteilung: **09.12.2009**
(21) Anmeldenummer: 06805902.1
(22) Anmeldetag: 27.09.2006
(51) Int. Cl.: B62D 7/09, B62D 7/20, F16C 11/04, F16C 11/02

(54) **ACHSSCHENKELLENKVORRICHTUNG EINES FAHRZEUGS**
AXLE PIVOT STEERING DEVICE OF A VEHICLE
DISPOSITIF DE DIRECTION A FUSEE D'ESSIEU D'UN VEHICULE

(30) Priorität: 30.09.2005 DE 102005046895
(43) Veröffentlichungstag der Anmeldung: 11.06.2008
(73) Patentinhaber: ZF Friedrichshafen AG, 88038 Friedrichshafen (DE)
(72) Erfinder: MAIR, Ulrich, 88045 Friedrichshafen (DE); KRUBER, Klaus, 94550 Künzing (DE); WALLNER, Stefan, 88046 Friedrichshafen (DE); HUELSMANN, Markus, 49179 Ostercappeln (DE); ZIEMSKI, Grzegorz, 49152 Bad Essen (DE)
(86) Internationale Anmeldenummer: PCT/EP2006/009381
(87) Internationale Veröffentlichungsnummer: WO 2007/039200

(56) Entgegenhaltungen:
- EP-A2- 0 741 069
- EP-A2- 0 897 852
- EP-A2- 1 500 575
- DE-A1- 1 555 295
- DE-A1-102004 053 722
- DE-C1- 4 336 286

## Beschreibung

Die Erfindung betrifft eine Achsschenkellenkvorrichtung eines Fahrzeugs gemäß der im Oberbegriff des Patentanspruches 1 näher definierten Art, und bekannt aus EP 1 500 575 A2.

Aus der DE 10 2004 053 722 ist ein Fahrzeug mit wenigstens einer über eine Achsschenkellenkung lenkbar ausgeführten Fahrzeugachse bekannt. Die Achsschenkellenkung ist mit einer Hauptlenkzylindereinrichtung ausgeführt, die mit Spurstangen gelenkig verbunden ist. Die Spurstangen stehen mit jeweils einem Radträger in Wirkverbindung. Eine Lenkkinematik der Achsschenkellenkung steht jeweils im Bereich zwischen der Hauptlenkzylindereinrichtung und einem Radträger mit einem Hebelelement, das um einen festen Drehpunkt drehbar ist, derart gelenkig in Wirkverbindung, dass in Abhängigkeit einer Lage des Drehpunktes und einer Länge des Hebelelements ein mit einem angeforderten Lenkwinkel korrespondierender Lenkwinkelfehler im Wesentlichen durch eine Verkleinerung des Einschlagwinkels des jeweils kurvenäußeren Rades im Verhältnis zum Einschlagwinkel des jeweils kurveninneren Rades minimiert ist.

Nachteilig dabei ist jedoch, dass die Verbindungsgelenke zwischen Spurteilstangen der Spurstange und den Hebelelementen als Kugelgelenke ausgeführt sind, bei welchen durch die unsymmetrisch verteilten Kraftangriffspunkte Lagermomente angreifen, die abzustützen sind. Das Abstützen der Lagermomente erfolgt über die Spurteilstangen und die Hebelelemente, weshalb diese Bauteile der Achsschenkellenkung entsprechend dimensioniert werden müssen, was jedoch eine Erhöhung des Fahrzeuggewichtes sowie der Herstellkosten der Achsschenkellenkung zur Folge hat.

Zusätzlich ist von Nachteil, dass die abzustützenden Lagermomente insbesondere bei Gleitlagern zu unsymmetrischen Traglastverteilungen führen, die aufgrund des daraus resultierenden so genannten Kantentragens höhere Betätigungskräfte bzw. Lenkkräfte verursachen und die Lebensdauer der Verbindungsgelenke der Achsschenkellenkung in unerwünschtem Umfang reduzieren.

Der vorliegenden Erfindung liegt daher die Aufgabe zugrunde, eine Achsschenkellenkvorrichtung zur Verfügung zu stellen, welche konstruktiv einfach herstellbar ist und durch eine hohe Lebensdauer und geringe Herstellkosten gekennzeichnet ist.

Erfindungsgemäß wird diese Aufgabe mit einer Achsschenkellenkvorrichtung eines Fahrzeugs gemäß den Merkmalen des Patentanspruches 1 gelöst.

Die erfindungsgemäße Achsschenkellenkvorrichtung eines Fahrzeugs ist mit ersten Hebelelementen ausgeführt, die jeweils über ein zweites Hebelelement mit einem Radträger in Wirkverbindung stehen und im Bereich ihrer Verbindungen mit den zweiten Hebelelementen über dritte Hebelelemente jeweils mit festen Drehpunkten gelenkig verbunde sind.

Erfindungsgemäß sind wenigstens zwei der Hebelelemente im Verbindungsbereich der Hebelelemente derart gabelförmig ausgeführt und zusätzlich jeweils mit zueinander beabstandeten sowie von einem Lagerbolzen durchgriffenen Lagerstellen ausgebildet.

Damit wird auf konstruktiv einfache und kostengünstige Art und Weise erreicht, dass die aus den am Lagerbolzen angreifenden Lagerkräfte resultierenden Lagermomente wenigstens annähernd Null sind, womit ein Kantentragen im Bereich eines Gleitlagerungen aufweisenden Verbindungsgelenkes vermieden werden. Zusätzlich können die über das Verbindungsgelenk verbundenen Bauteile bzw. Hebelelemente der Achsschenkellenkvorrichtung im Vergleich zu über herkömmliche, doppelt wirkende Kugelgelenke verbundene Hebelelemente mit geringeren Querschnitten dimensioniert werden, wodurch ein Fahrzeuggesamtgewicht auf einfache Art und Weise reduziert ist.

Weitere Vorteile und vorteilhafte Weiterbildungen der Erfindung ergeben sich aus den Patentansprüchen und den unter Bezugnahme auf die Zeichnung prinzipmäßig beschriebenen Ausführungsbeispielen, wobei in der Beschreibung der verschiedenen Ausführungsbeispiele der Übersichtlichkeit halber für bau- und funktionsgleiche Bauteile dieselben Bezugszeichen verwendet werden.
Es zeigt:
- **Fig. 1a**: eine Prinzipdarstellung einer Achsschenkellenkvorrichtung einer Fahrzeugachse eines Fahrzeugs, deren Lenkkinematik im Bereich zwischen einer Hauptlenkzylindereinrichtung und Radträgern mit einem Hebelelement in Wirkverbindung steht, in einem einer Geradeausfahrt äquivalenten Zustand;
- **Fig. 1b**: die in Fig. 1a dargestellte Fahrzeugachse in einem einer Kurvenfahrt äquivalenten Zustand;
- **Fig. 2a**: ein erstes Ausführungsbeispiel eines Verbindungsgelenkes der Achsschenkellenkvorrichtung gemäß Fig. 1 in einer Längsschnittansicht;
- **Fig. 2b**: eine zweidimensionale Draufsicht auf das Verbindungsgelenk gemäß Fig. 2a;
- **Fig. 3a**: ein zweites Ausführungsbeispiel des in Fig. 1 lediglich stark schematisiert dargestellten Verbindungsgelenkes in einer Längsschnittansicht;
- **Fig. 3b**: eine zweidimensionale Draufsicht auf das Verbindungsgelenk gemäß Fig. 3a;
- **Fig. 4a**: eine dreidimensionale Teilschnittansicht eines dritten Ausführungsbeispieles des Verbindungsgelenkes gemäß Fig. 1;
- **Fig. 4b**: eine zweidimensionale Draufsicht auf das Verbindungsgelenk in Fig. 4a;
- **Fig. 5a**: eine Längsschnittansicht eines vierten Ausführungsbeispieles des Verbindungsgelenkes gemäß Fig. 1; und
- **Fig. 5b**: eine Draufsicht auf das Verbindungsgelenk gemäß Fig. 5a.

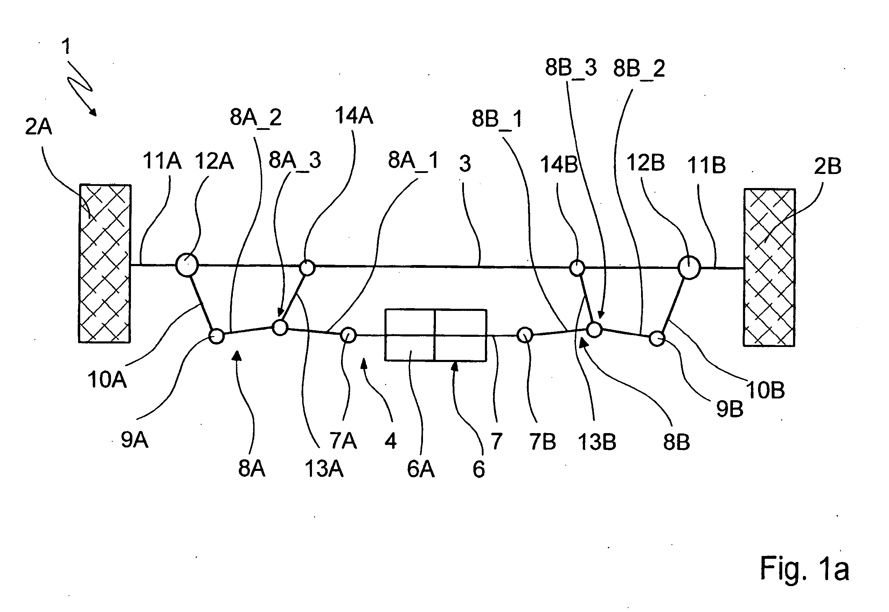

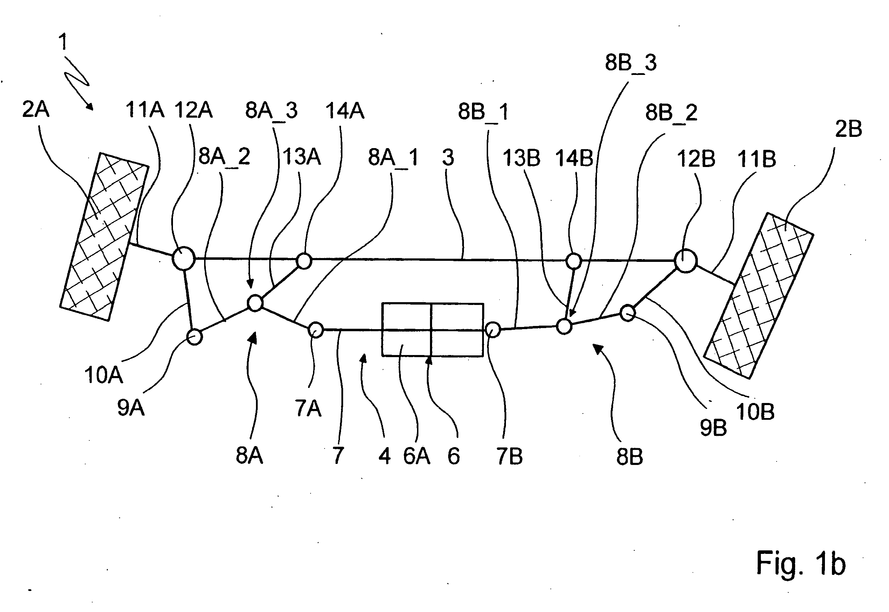

Fig. 1a zeigt eine lenkbar ausgeführte Fahrzeugachse 1 eines vorzugsweise als Baufahrzeug ausgebildeten Fahrzeugs in einer stark schematisierten Einzeldarstellung. Räder 2A und 2B der lenkbaren Fahrzeugachse 1 sind aus der dargestellten Position, welche einer Geradeausfahrt des Fahrzeugs entspricht, in eine verschwenkte bzw. in eine eingeschlagene Position für eine Kurvenfahrt des Fahrzeugs überführbar, wobei die Fahrzeugachse 1 in Fig. 1 b als Fahrzeugvorderachse während einer fahrerseitigen Anforderung für eine Rechtskurve dargestellt ist. Zur Umsetzung einer fahrerseitigen Fahrtrichtungsänderung sind die Räder 2A und 2B der Fahrzeugachse 1 über eine Achsschenkellenkvorrichtung 4 aus der in Fig. 1 dargestellten Position in die dem jeweils angeforderten Lenkwinkel entsprechende verschwenkte Position bringbar.

Die Achsschenkellenkvorrichtung 4 ist vorliegend mit einer mit einem Gleichlaufzylinder 6A ausgeführten Hauptlenkzylindereinrichtung 6 ausgebildet, die in Fahrzeugquerrichtung parallel zu einer zwischen den Rädern 2A, 2B in an sich bekannter Art und Weise angeordneten Achse 3 der Fahrzeugachse 1 verlaufend angeordnet ist. Eine Kolbenstange 7 der Hauptlenkzylindereinrichtung 6 ist an ihren beiden Enden jeweils über ein als Kugelgelenk ausgeführtes Kolbenstangengelenk 7A, 7B mit jeweils einer Spurstange 8A bzw. 8B verbunden. Die Spurstangen 8A und 8B sind wiederum über an ihren der Kolbenstange 7 abgewandten Enden angeordnete Spurstangengelenke 9A, 9B mit Radträgern 10A, 10B verbunden. Die Radträger 10A, 10B sind fest mit Radnaben 11A, 11B der Räder 2A und 2B verbunden, die wiederum gemeinsam mit den Rädern 2A und 2B um Lenkdrehachsen 12A, 12B gegenüber der Achse 3 verschwenkbar ausgeführt sind.

Zur Beeinflussung der von der Bewegung der Kolbenstange 7 bewirkten Schwenkbewegung der Räder 2A, 2B der Fahrzeugachse 1 sind die Abstände zwischen den Spurstangengelenken 9A, 9B und den Kolbenstangengelenken 7A, 7B verändert ausgeführt. Dazu sind die Spurstangen 8A, 8B zweiteilig ausgeführt, wobei die erste und zweite Hebelelemente darstellenden Spurteilstangen 8A_1, 8A_2 bzw. 8B_1, 8B_2 über Verbindungsgelenke 8A_3 bzw. 8B_3 gelenkig miteinander verbunden sind.

Zusätzlich sind die Spurstangen 8A, 8B im Bereich der Verbindungsgelenke 8A_3, 8B_3 jeweils über dritte Hebelelemente 13A, 13B gelenkig mit der Achse 3 der Fahrzeugachse 1 verbunden. Die beiden dritten Hebelelemente 13A und 13B sind an ihren den Verbindungsgelenken 8A_3 bzw. 8B_3 abgewandten Enden um mit der Achse 3 fest verbundene Drehpunkte 14A, 14B, die auch an anderer Stelle karosserieseitig festgelegt sein können, drehbar ausgeführt, so dass die Verbindungsgelenke 8A_3 bzw. 8B_3 mit der Achse 3 derart gelenkig in Wirkverbindung stehen, dass die dritten Hebelelemente 13A bzw. 13B jeweils eine Zwangsführung für die Verbindungsgelenke 8A_3 bzw. 8B_3 darstellen und der Lenkwinkeleinschlag des jeweils kurvenäußeren Rades im Verhältnis zum Lenkwinkeleinschlag des jeweils kurveninneren Rades derart verkleinert wird, dass ein Lenkwinkelfehler vorzugsweise gegen Null reduziert wird.

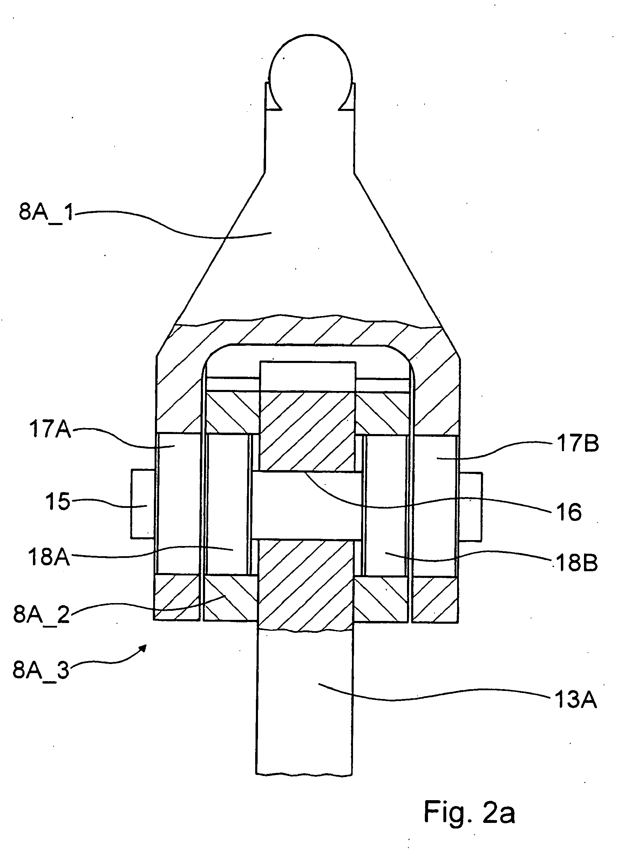

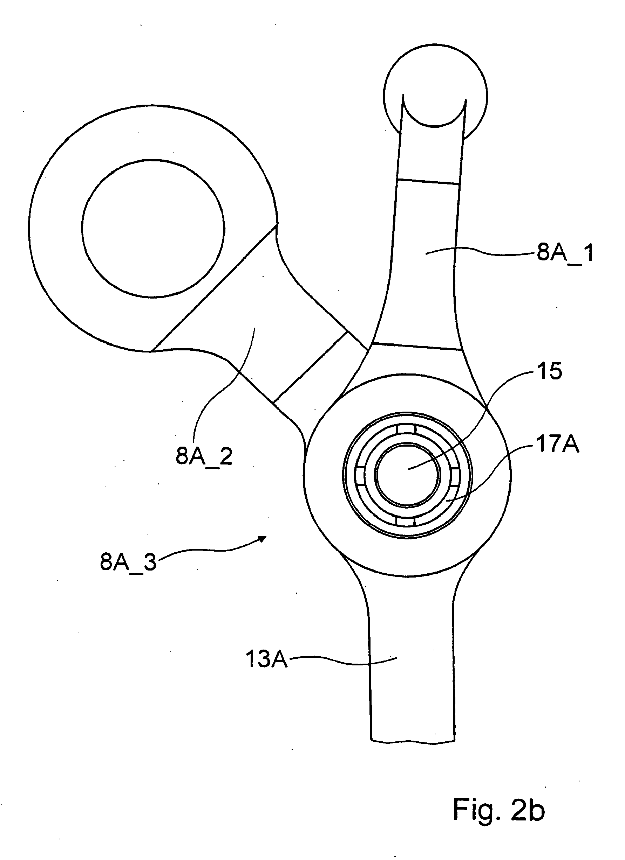

Der Vorteil der erfindungsgemäß ausgeführten Lenkkinematik der Achsschenkellenkvorrichtung 4 der Fahrzeugachse 1 ergibt sich aus dem Vergleich der Darstellungen gemäß Fig. 1 und Fig. 2. Der direkte Vergleich der beiden Darstellungen zeigt, dass sowohl der Winkel zwischen den dem ersten Hebelelement 8A_1 und dem zweiten Hebelelement 8B_2 sowie zwischen dem Radträger 10A und dem über das Spurstangengelenk 9A damit verbundenen zweiten Hebelelement 8A_2 im Vergleich zu den Winkeln zwischen dem ersten Hebelelement 8B_1 und dem zweiten Hebelelement 8B_2 sowie zwischen dem Radträger 10B und dem über das Spurstangengelenk 9B damit gelenkig verbundenen zweiten Hebelelement 8B_2 derart verändert sind, dass der Lenkwinkeleinschlag des kurvenäußeren Rades 2A im Verhältnis zum Lenkwinkeleinschlag des kurveninneren Rades 2B gegenüber einem aus der Praxis bekannten Fahrzeug dahingehend verkleinert ist, dass ein Lenkwinkelfehler zwischen den beiden Rädern 2A und 2B auf einfache Art und Weise minimiert ist.

Das bedeutet, dass die Drehpunkte 14A und 14B sowie die Längen der dritten Hebelelemente 13A und 13B derart vorgesehen sind, dass die dem kurvenäußeren Rades 2A zugeordnete Lenkkinematik in der vorbeschriebenen und einen Lenkwinkelfehler minimierenden Art und Weise verändert wird, während die Bauteile der dem kurveninneren Rad 2B zugeordneten Lenkkinematik im Bereich der ersten und zweiten Hebelelemente 8B_1 und 8B_2 nahezu auf einer Linie bleiben, so dass der durch die Ansteuerung der Hauptlenkzylindereinrichtung 6 verursachte Lenkwinkeleinschlag des jeweils kurveninneren Rades im Vergleich zu einer herkömmlich ausgeführten lenkbaren Achse nahezu unverändert eingestellt wird.

In Fig. 2a und Fig. 2b ist ein erstes Ausführungsbeispiel des in Fig. 1a und Fig. 1b lediglich stark schematisiert dargestellten Verbindungsgelenkes 8A_3 gezeigt, über welches die drei Hebelelemente 8A_1, 8A_2 und 13A in der vorbeschriebenen Art und Weise gelenkig miteinander verbunden sind.

Dabei sind das erste Hebelelement bzw. die erste Spurteilstange 8A_1 und auch das zweite Hebelelement bzw. die zweite Spurteilstange 8A_2 vorliegend im Verbindungsbereich der Hebelelemente 8A_1, 8A_2 und 13A gabelförmig ausgeführt und jeweils mit zueinander beabstandeten sowie von einem Lagerbolzen 15 durchgriffenen Lagerstellen ausgebildet. Das dritte Hebelelement 13A ist vorliegend im Verbindungsbereich der Hebelelemente 8A_1, 8A_2 und 13A wenigstens annähernd I-profilförmig ausgebildet und von den gabelförmigen Bereichen des ersten Hebelelementes 8A_1 und des zweiten Hebelelementes 8A_2 umgriffen und über den Lagerbolzen 15 mit den beiden anderen Hebelelementen 8A_1 und 8A_2 drehbar verbunden.

Der Lagerbolzen 15 ist in eine Durchgangsbohrung 16 des dritten Hebelelementes 13A eingepresst und somit drehfest mit diesem verbunden. Zusätzlich sind sowohl zwischen dem ersten Hebelelement 8A_1 und dem Lagerbolzen 15 als auch zwischen dem zweiten Hebelelement 8A_2 und dem Lagerbolzen 15 Wälzlagereinrichtungen 17A, 17B bzw. 18A und 18B vorgesehen.

Das in Fig. 2a und Fig. 2b dargestellte Verbindungsgelenk 8A_3 ist aufgrund der symmetrischen Anbindung der drei Hebelelemente 8A_1, 8A_2 und 13A an den Lagerbolzen 15 nach außen momentfrei, so dass über die Hebelelemente 8A_1, 8A_2 und 13A im Wesentlichen nur Zug- und Druckkräfte übertragen werden müssen, wodurch die Hebelelemente im Vergleich zu aus dem Stand der Technik bekannten Achsschenkellenkvorrichtungen, bei welchen über die Hebelelemente Lagermomente abgestützt werden müssen, mit geringeren Widerstandsmomenten ausgeführt werden können.

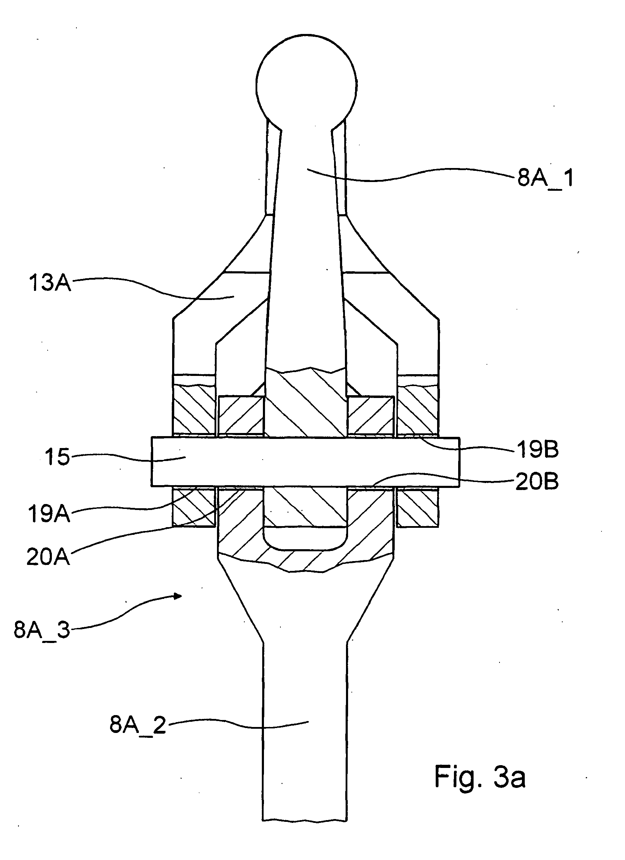

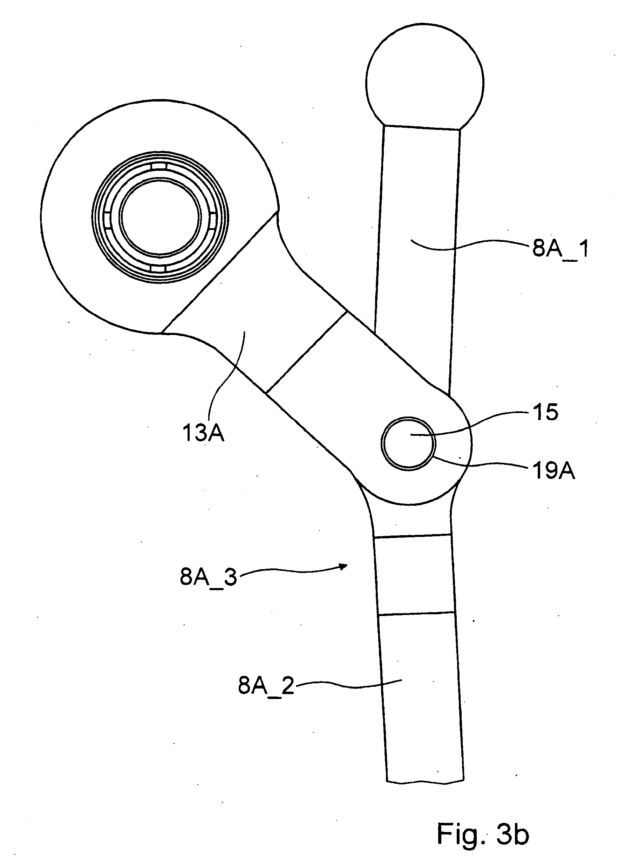

In Fig. 3a und Fig. 3b ist ein zweites Ausführungsbeispiel des Verbindungsgelenkes 8A_3 dargestellt, welches sich von dem in Fig. 2a und Fig. 2b dargestellten ersten Ausführungsbeispiel im Wesentlichen lediglich im Bereich der ausgewählten Lagerarten zwischen dem Lagerbolzen 15 und den Hebelelementen 8A_1, 8A_2 und 13A unterscheidet. Bei dem zweiten Ausführungsbeispiel des Verbindungsgelenkes 8A_3 ist der Lagerbolzen 15 mit dem ersten Hebelelement 8A_1 über eine Presspassung mit diesem drehfest verbunden, während zwischen dem zweiten Hebelelement 8A_2 und dem Lagerbolzen 15 sowie zwischen dem dritten Hebelelement 13A und dem Lagerbolzen 15 jeweils Gleitlagereinrichtungen 19A, 19B bzw. 20A, 20B vorgesehen sind.

Ein weiterer Unterschied zwischen dem ersten Ausführungsbeispiel des Verbindungsgelenkes 8A_3 gemäß Fig. 1a und dem zweiten Ausführungsbeispiel des Verbindungsgelenkes 8A_3 gemäß Fig. 2a ist, dass beim zweiten Ausführungsbeispiel das dritte Hebelelement 13A im Verbindungsbereich der Hebelelemente gabelförmig ausgeführt ist und-sowohl den gabelförmigen Bereich des zweiten Hebelelementes 8A_2 als auch das im Verbindungsbereich der Hebelelemente wenigstens annähernd I-profilförmig ausgebildete erste Hebelelement 8A_1 umgreift.

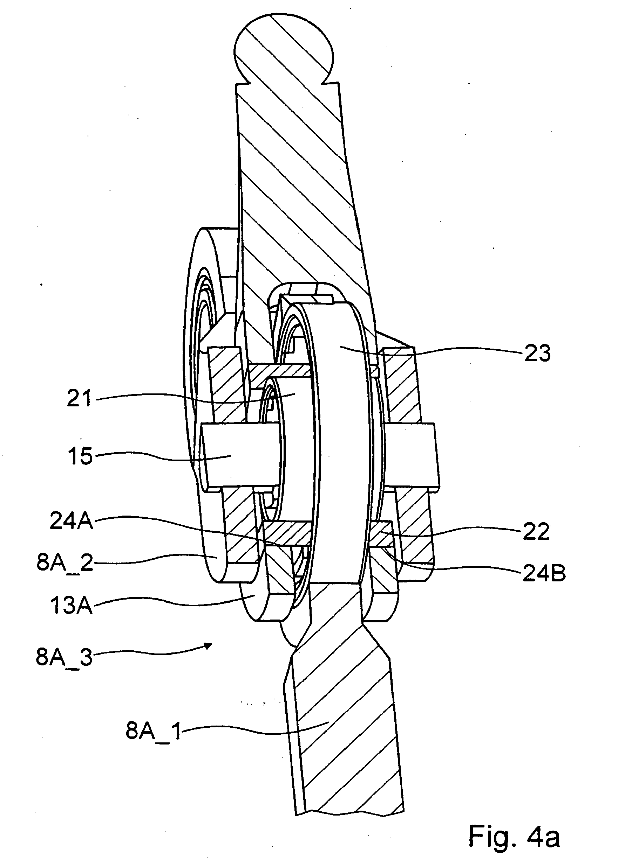

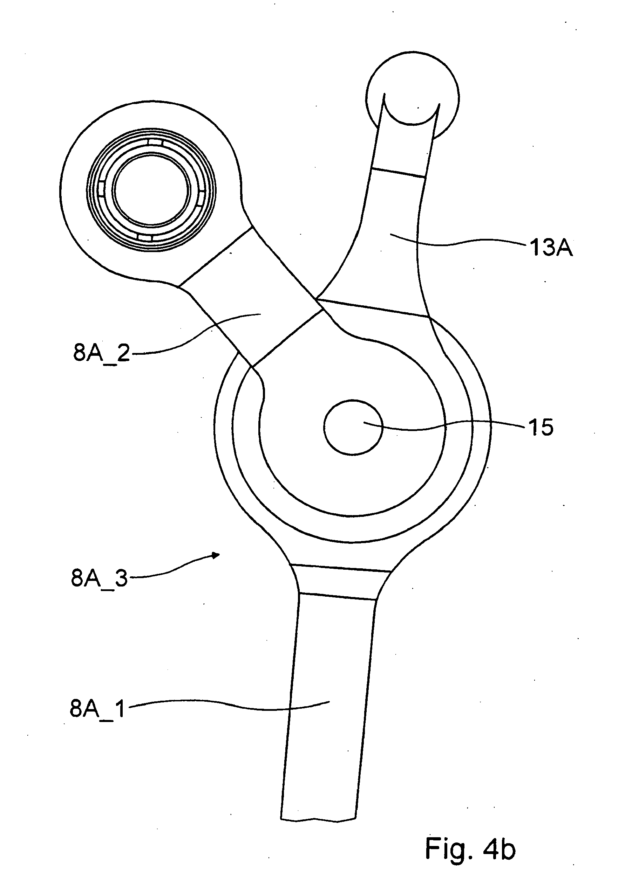

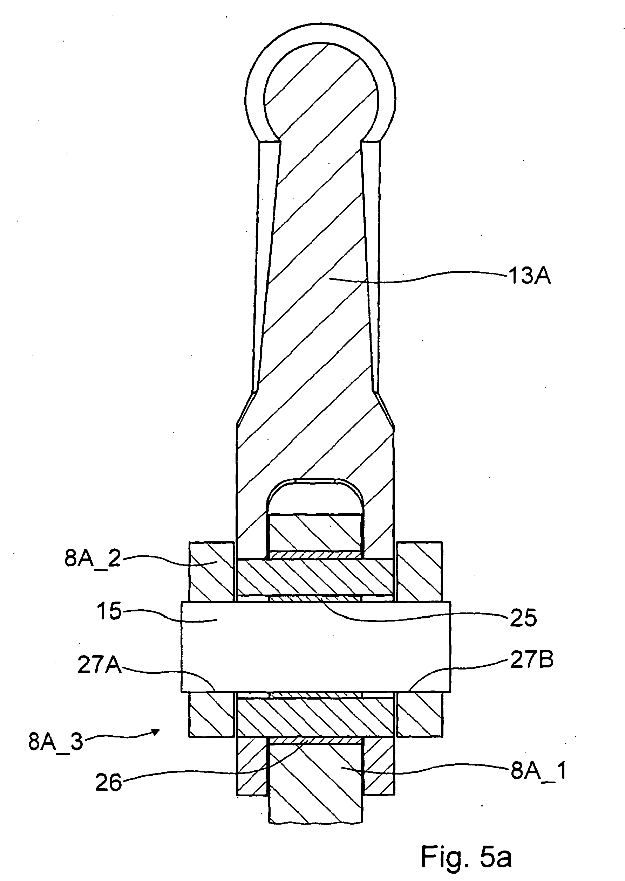

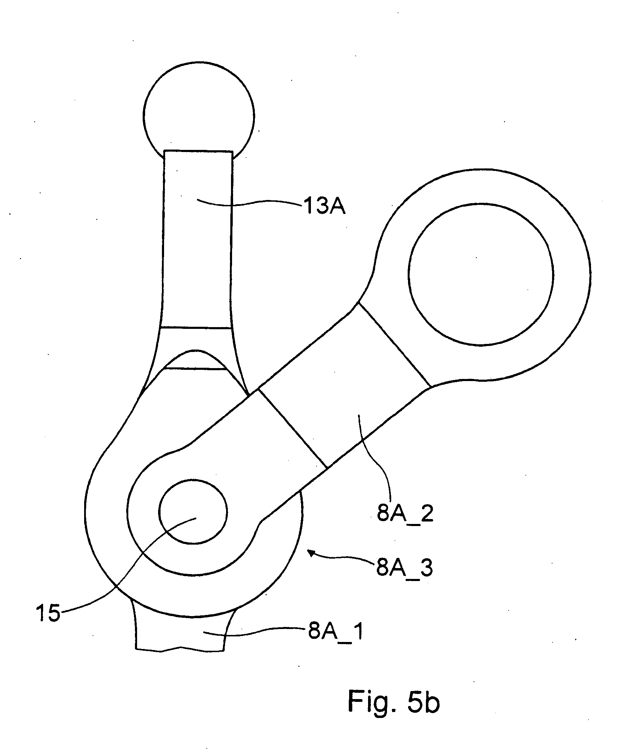

In Fig. 4a und 4b ist ein drittes Ausführungsbeispiel des Verbindungsgelenkes 8A_3 gemäß Fig. 1 a gezeigt, welches wie das in Fig. 5a und Fig. 5b dargestellte vierte Ausführungsbeispiel des Verbindungsgelenkes 8A_3 gemäß Fig. 1a im Vergleich zu den beiden ersten Ausführungsbeispielen gemäß Fig. 2a und gemäß Fig. 3a in Bezug auf die Längsachse des Lagerbolzens 15 mit einer geringeren Lagerhöhe ausgebildet ist, wobei ein Lagerdurchmesser bei dem dritten Ausführungsbeispiel und bei dem vierten Ausführungsbeispiel größer ist als der Lagerdurchmesser der ersten beiden Ausführungsbeispiele des Verbindungsgelenkes 8A_3.

Bei dem dritten Ausführungsbeispiel des Verbindungsgelenkes 8A_3 gemäß Fig. 4a ist der Lagerbolzen 15 über eine Presspassung drehfest mit dem zweiten Hebelelement 8A_2, welches die äußere Gabel des Verbindungsgelenkes 8A_3 ausbildet, verbunden. Das dritte Hebelelement 13A ist über eine Wälzlagereinrichtung 21 drehbar am Lagerbolzen 15 gelagert, wobei zwischen dem dritten Hebelelement 13A und der Wälzlagereinrichtung 21 eine Lagerhülse 22 angeordnet ist, auf welcher wiederum eine für das erste Hebelelement 8A_1 vorgesehene weitere Wälzlagereinrichtung 23 angeordnet ist, über die das erste Hebelelement 8A_1 drehbar am Lagerbolzen 15 gelagert ist.

Die geringere Lagerhöhe des Verbindungsgelenkes 8A_3 gemäß Fig. 4a wird dadurch ermöglicht, dass die zueinander beabstandeten Lagerstellen des gabelförmigen Bereiches des dritten Hebelelementes 13A aufgrund der durch den im Vergleich zu den beiden ersten Ausführungsbeispielen des Verbindungsgelenkes 8A_3 vergrößerten Lagerdurchmessers reduzierten Pressung mit geringeren Wandstärken ausgeführt werden können. Gleichzeitig ist auch die Wandstärke des im Verbindungsbereich der Hebelelemente wenigstens annähernd I-profilförmig ausgebildeten ersten Hebelelementes 8A_1 aufgrund des vergrößerten Lagerdurchmessers und der_dadurch reduzierten Pressung im Vergleich zu den Verbindungsgelenken gemäß Fig. 2a und Fig. 3a reduziert, so dass das Verbindungsgelenk 8A_3 gemäß Fig. 4a insgesamt mit der geringeren Lagerhöhe ausführbar ist.

Die Reduzierung der Wandstärke der von dem Lagerbolzen 15 durchgriffenen Lagerstellen des dritten Hebelelementes 13A des Verbindungsgelenkes 8A_3 gemäß Fig. 4a wird auch dadurch ermöglicht, dass zwischen der Lagerhülse 22 und dem dritten Hebelelement 13A keine Relativbewegung vorliegt, da die Lagerhülse in die Durchgangsbohrungen 24A und 24B des dritten Hebelelementes 13A eingepresst ist.

Bei dem in Fig. 5a und Fig. 5b dargestellten vierten Ausführungsbeispiel des Verbindungsgelenkes 8A_3 gemäß Fig. 1a bzw. Fig. 1b sind die Wälzlagereinrichtungen 21 und 23 des Verbindungsgelenkes 8A_3 gemäß Fig. 4a durch Gleitlagereinrichtungen 25 und 26 ersetzt, welche im Vergleich zu Wälzlagereinrichtungen jeweils eine kostengünstigere Alternative darstellen.

Ansonsten entspricht der Aufbau des Verbindungsgelenkes 8A_3 gemäß Fig. 5a dem Aufbau des Verbindungsgelenkes gemäß Fig. 4a, bei welchem der Lagerbolzen 15 jeweils in die Durchgangsbohrungen 27A und 27B des zweiten Hebelelementes 8A_2 eingepresst ist, womit zwischen dem Lagerbolzen 15 und dem zweiten Hebelelement 8A_2 eine Relativbewegung vermieden ist.

Grundsätzlich besteht bei allen vorbeschriebenen vier Ausführungsbeispielen des Verbindungsgelenkes 8A_3 die Möglichkeit, die Anordnung der drei Hebelelemente 8A_1, 8A_2 und 13A in Abhängigkeit des jeweils vorliegenden Anwendungsfalles zu variieren, so dass wahlweise das erste Hebelelement 8A_1, das zweite Hebelelement 8A_2 oder das dritte Hebelelement 13A im Verbindungsbereich der Hebelelemente wenigstens annähernd I-profilförmig ausgeführt ist und von den gabelförmigen Bereichen der beiden anderen Hebelelemente 8A_2, 13A bzw. 8A_1,13A oder 8A_1 und 8A_2 in der in der Zeichnung dargestellten Art und Weise umgriffen ist.

### Bezugszeichen

- 1: Fahrzeugachse
- 2A, 2B: Rad
- 3: Achse
- 4: Achsschenkellenkung
- 6: Hauptlenkzylinder
- 7: kolbenstange
- 7A, 7B: Kotbenstangengetenk
- 8A, 8B: Spurstange
- 8A_1, 8B_1: Spurteilstange, erstes Hebelelement
- 8A_2, 8B_2: Spurteilstange, zweites Hebelelement
- 8A_3,8B_3: Verbindungsgelenk
- 9A, 9B: Spurstangengelenk
- 10A, 10B: Radträger
- 11A, 11B: Radnabe .
- 12A, 12B: Lenkdrehachse
- 13A, 13B: drittes Hebelelement
- 14A, 14B: Drehpunkt
- 15: Lagerbolzen
- 16: Durchgangsbohrung des dritten Hebelelementes
- 17A, 17B: Wälzlagereinrichtung
- 18A, 18B: Wälzlagereinrichtung
- 19A, 19B: Gleitlagereinrichtung
- 20A, 20B: Gleitlagereinrichtung
- 21: Wälzlagereinrichtung
- 22: Lagerhülse
- 23: Wälzlagereinrichtung
- 24A, 24B: Durchgangsbohrung des dritten Hebelelementes
- 25: Gleitlagereinrichtung
- 26: Gleitlagereinrichtung
- 27A, 27B: Durchgangsbohrung des zweiten Hebelelementes

## Patentansprüche

1. Achsschenkellenkvorrichtung (4) eines Fahrzeugs mit ersten Hebelelementen (8A_1, 8B_1), die jeweils über ein zweites Hebelelement (8A_2, 8B_2) mit einem Radträger (10A, 10B) in Wirkverbindung stehen und im Bereich ihrer Verbindungen mit den zweiten Hebelelementen (8A_2, 8B_2) über dritte Hebelelemente (13A, 13B) jeweils mit festen Drehpunkten (14A, 14B) gelenkig verbunden sind, **dadurch gekennzeichnet, dass** wenigstens zwei der Hebelelemente (8A_1, 8A_2; 8A_1, 13A; 8A_2, 13A) im Verbindungsbereich der Hebelelemente (8A_1, 8A_2, 13A) derart gabelförmig ausgeführt sind und diese jeweils mit zueinander beabstandeten sowie von einem Lagerbolzen (15) durchgriffenen Lagerstellen ausgebildet sind, dass die aus den am Lagerbolzen (15) angreifenden Lagerkräften resultierenden Lagermomente wenigstens annähernd Null sind.

2. Fahrzeug nach Anspruch 1, **dadurch gekennzeichnet, dass** eines der Hebelelemente (8A_1 ; 8A_2; 13A) mit seinem vom Lagerbolzen (15) durchgriffenen Bereich wenigstens bereichsweise innerhalb der gabelförmigen Bereiche der anderen beiden Hebelelemente (8A_1 , 8A_2; 8A_1, 13A; 8A_2, 13A) angeordnet ist.

3. Fahrzeug nach Anspruch 1 oder 2, **dadurch gekennzeichnet, dass** zwischen dem Lagerbolzen (15) und einem der Hebelelemente (8A_1; 8A_2; 13A) eine Presspassung vorgesehen ist.

4. Fahrzeug nach einem der Ansprüche 1 bis 3, **dadurch gekennzeichnet, dass** zwischen dem Lagerbolzen (15) und zwei der Hebelelemente (8A_1, 8A_2; 8A_1,13A; 8A_2, 13A) jeweils wenigstens eine Lagereinrichtung (17A, 17B, 18A, 18B; 19A, 19B, 20A, 20B; 21, 23; 25, 26), vorzugsweise eine Gleitlagereinrichtung oder eine Wälzlagereinrichtung, vorgesehen ist.

5. Fahrzeug nach einem der Ansprüche 1 bis 4, **dadurch gekennzeichnet, dass** zwischen einem der Hebelelemente (13A) und dem Lagerbolzen (15) eine Lagerhülse (22) vorgesehen ist, die mit dem Hebelelement (13A) drehfest verbunden ist, wobei ein weiteres Hebelelement (8A_1) drehbar auf der Lagerhülse (22) des damit verbundenen Hebelelementes (13A) gelagert ist.

## Claims

1. Axle-pivot steering device (4) of a vehicle, having first lever elements (8A_1, 8B_1) which are operatively connected in each case by means of a second lever element (8A_2, 8B_2) to a wheel carrier (10A, 10B) and, in the region of their connections to the second lever elements (8A_2, 8B_2), are articulatedly connected by means of third lever elements (13A, 13B) in each case to fixed pivot points (14A, 14B), **characterized in that** at least two of the lever elements (8A_1, 8A_2; 8A_1, 13A; 8A_2, 13A) are of fork-shaped design in the connecting region of the lever elements (8A_1, 8A_2, 13A), and the latter are formed in each case with bearing points which are spaced apart from one another and through which a bearing journal (15) extends, in such a way that the bearing torques resulting from the bearing forces which act on the bearing journal (15) are at least approximately zero.

2. Vehicle according to Claim 1, **characterized in that** one of the lever elements (8A_1; 8A_2; 13A) is arranged, with its region through which the bearing journal (15) extends, at least in regions within the fork-shaped regions of the other two lever elements (8A_1, 8A_2; 8A_1, 13A; 8A_2, 13A).

3. Vehicle according to Claim 1 or 2, **characterized in that** an interference fit is provided between the bearing journal (15) and one of the lever elements (8A_1; 8A_2; 13A).

4. Vehicle according to one of Claims 1 to 3, **characterized in that** in each case at least one bearing device (17A, 17B, 18A, 18B; 19A, 19B, 20A, 20B; 21, 23; 25, 26), preferably a plain bearing device or a rolling bearing device, is provided between the bearing journal (15) and two of the lever elements (8A_1, 8A_2; 8A_1, 13A; 8A_2, 13A).

5. Vehicle according to one of Claims 1 to 4, **characterized in that** a bearing sleeve (22) is provided between one of the lever elements (13A) and the bearing journal (15), which bearing sleeve (22) is rotationally fixedly connected to the lever element (13A), with a further lever element (8A_1) being rotatably mounted on the bearing sleeve (22) of the lever element (13A) which is connected thereto.

## Revendications

1. Dispositif de direction à fusée d'essieu (4) d'un véhicule comprenant des premiers éléments de levier (8A_1, 8B_1), qui sont en liaison fonctionnelle à chaque fois par le biais d'un deuxième élément de levier (8A_2, 8B_2) avec un support de roue (10A, 10B), et qui sont connectés de manière articulée dans la région de leurs connexions aux deuxièmes éléments de levier (8A_2, 8B_2) par le biais de troisièmes éléments de levier (13A, 13B) à chaque fois à des centres de rotation fixes (14A, 14B), **caractérisé en ce qu'**au moins deux des éléments de levier (8A_1, BA_2 ; 8A_1, 13A ; 8A_2, 13A) sont réalisés en forme de fourche dans la région de connexion des éléments de levier (8A_1, 8A_2, 13A), et ceux-ci sont à chaque fois réalisés avec des points de palier espacés les uns des autres et traversés par un boulon de palier (15), de telle sorte que les couples de palier résultant des forces de palier s'exerçant sur le boulon de palier (15) soient au moins pratiquement nuls.

2. Véhicule selon la revendication 1, **caractérisé en ce que** l' un des éléments de levier (8A_1 ; 8A_2 ; 13A) est disposé avec sa région traversée par le boulon de palier (15) au moins en partie à l'intérieur des régions en forme de fourche des autres deux éléments de levier (8A_1, 8A_2 ; 8A_1, 13A ; 8A_2, 13A).

3. Véhicule selon la revendication 1 ou 2, **caractérisé en ce que** l'on prévoit entre le boulon de palier (15) et l'un des éléments de levier (8A_1 ; 8A_2 ; 13A) un ajustement serré.

4. Véhicule selon l'une quelconque des revendications 1 à 3, **caractérisé en ce que** l'on prévoit entre le boulon de palier (15) et deux des éléments de levier (8A_1, 8A_2 ; 8A_1, 13A ; 8A_2, 13A) à chaque fois au moins un dispositif de palier (17A, 17B, 18A, 18B ; 19A, 19B, 20A, 20B ; 21, 23 ; 25, 26), de préférence un dispositif de palier lisse ou un dispositif de palier à roulement.

5. Véhicule selon l'une quelconque des revendications 1 à 4, **caractérisé en ce que** l'on prévoit entre l'un des éléments de levier (13A) et le boulon de palier (15) une douille de palier (22), qui est connectée de manière solidaire en rotation à l'élément de levier (13A), un autre élément de levier (8A_1) étant monté à rotation sur la douille de palier (22) de l'élément de levier (13A) connecté à celui-ci.
